# EUROPEAN PATENT APPLICATION

(11) **EP 4 734 157 A1**
(43) Date of publication of application: **29.04.2026**
(21) Application number: 24852175.9
(22) Date of filing: 30.07.2024
(51) Int. Cl.: H01M 4/04, G06Q 50/04, G01B 7/004, G01N 21/88

(54) **ROLL MAP GENERATION SYSTEM AND ROLL MAP GENERATION METHOD**

(30) Priority: 04.08.2023 KR 20230102299
(71) Applicant: LG Energy Solution, Ltd., Seoul 07335 (KR)
(72) Inventor: KOH, Jee Yeon, Daejeon 34122 (KR); KIM, Min Su, Daejeon 34122 (KR); PARK, Jong Seok, Daejeon 34122 (KR); KIM, June Hee, Daejeon 34122 (KR); SHIN, Jong Kwon, Daejeon 34122 (KR); SIM, Min Kyu, Daejeon 34122 (KR); BAE, In Bong, Daejeon 34122 (KR)
(74) Representative: BCKIP Part mbB
(86) International application number: PCT/KR2024/011164
(87) International publication number: WO 2025/033821

(57) **Abstract**

Example embodiments of the present technology provide a roll map generating method. The roll map generating method includes collecting coordinate data of an electrode sheet and measurement data of the electrode sheet, and generating compressed measurement data based on the measurement data, in which the measurement data is collected by scanning sections of the electrode sheet.

## Description

### [Technical Field]

The present invention relates to a system configured to generate a roll map indicating a lot that is a unit of a wound electrode sheet, and a roll map generating method. The present application claims the benefit of priority based on Korean Patent Application No. 10-2023-0102299, filed on August 4, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

### [Disclosure]

### [Technical Problem]

The present invention is directed to providing a system configured to generate a roll map including information about quality and defects in an electrode manufacturing process.

### [Technical Solution]

Example embodiments of the present invention provide a roll map generating method. The roll map generating method includes collecting coordinate data of an electrode sheet and measurement data of the electrode sheet, and generating compressed measurement data based on the measurement data, in which the measurement data is collected by scanning sections of the electrode sheet.

The measurement data may include data of a loading amount of a coating material on the electrode sheet or thickness data of the electrode sheet.

The compressed measurement data may include an average of the measurement data in the section of the electrode sheet.

The average may be calculated from a part of the measurement data.

The electrode sheet may include a coated part to which the coating material is applied, and the average may be calculated from a part of the measurement data corresponding to the coated part.

The roll map generating method may further include calibrating the measurement data based on an offset measurement amount.

The roll map generating method may further include determining a start coordinate and an end coordinate of the section of the electrode sheet.

The section of the electrode sheet may include an outside-electrode region horizontally spaced apart from a sensing part of a measuring device configured to collect the measurement data.

The section of the electrode sheet may include a turnaround region configured to change a scanning direction of the sensing part.

Example embodiments provide a roll map generating method. The roll map generating method includes collecting first coordinate data and first measurement data of a first section of an electrode sheet, and determining a first average of a part of the first measurement data, a first start coordinate of the first section, and a first end coordinate of the first section, based on the first coordinate data and the first measurement data, in which the first measurement data is collected by scanning the first section.

The roll map generating method may further include collecting second coordinate data and second measurement data of a second section of the electrode sheet connected to the first section, and determining a second average of a part of the second measurement data, a second start coordinate of the second section, and a second end coordinate of the second section, based on the second coordinate data and the second measurement data.

The second measurement data is collected by scanning the second section.

The second start coordinate may be the same as the first end coordinate.

Example embodiments provide a roll map generating system. The roll map generating system includes: a controller configured to collect coordinate data of an electrode sheet based on a winding amount signal of the electrode sheet generated by an encoder, in which the encoder is configured to sense a length of the electrode sheet wound by a rewinder to generate the winding amount signal, and the coordinate data indicates a position on the electrode sheet; and a measuring device including a sensing part and a processor, in which the sensing part is configured to scan each of a plurality of sections of the electrode sheet to collect measurement data of the electrode sheet, and the processor is configured to collect the measurement data based on a measurement signal generating by the sensing part. The processor is configured to generate compressed measurement data based on the measurement data, and the compressed measurement data is smaller in size than the measurement data.

The compressed measurement data may include an average of a part of the measurement data of each of the plurality of sections of the electrode sheet.

The processor may be configured to determine a start coordinate and an end coordinate of each of the plurality of sections of the electrode sheet.

### [Advantageous Effects]

Example embodiments of the present invention provide a system for generating a roll map that enables feedback, feedforward, and tracking of an electrode process.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a roll map generating system according to example embodiments.
FIG. 2 is a flowchart of a roll map generating method according to example embodiments.
FIG. 3 illustrates measurement of an electrode sheet by a measuring device.
FIG. 4 illustrates a section of an electrode sheet.
FIG. 5 illustrates measurement data generated from a section of an electrode sheet.
FIG. 6 illustrates a visualized roll map.
FIG. 7 illustrates a sections of an electrode sheet.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment: Device, Second Embodiment: Method)

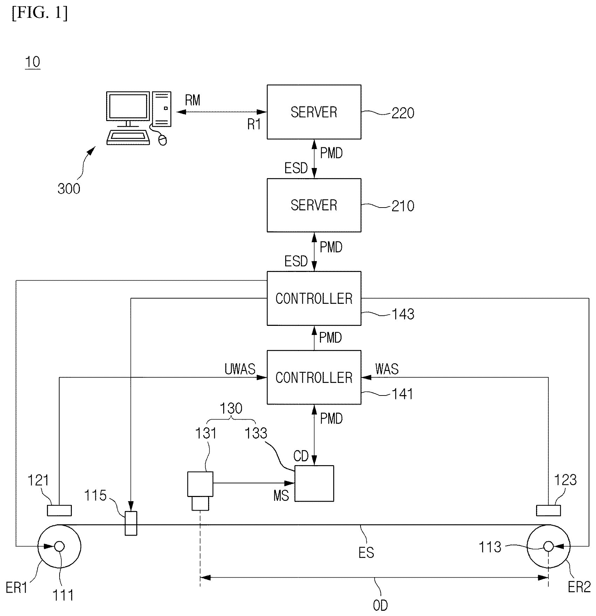

FIG. 1 illustrates a secondary battery manufacturing system 10 according to example embodiments.

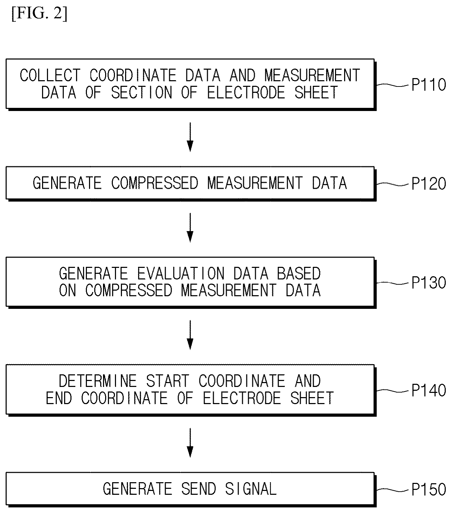

FIG. 2 is a flowchart of a roll map generating method according to example embodiments.

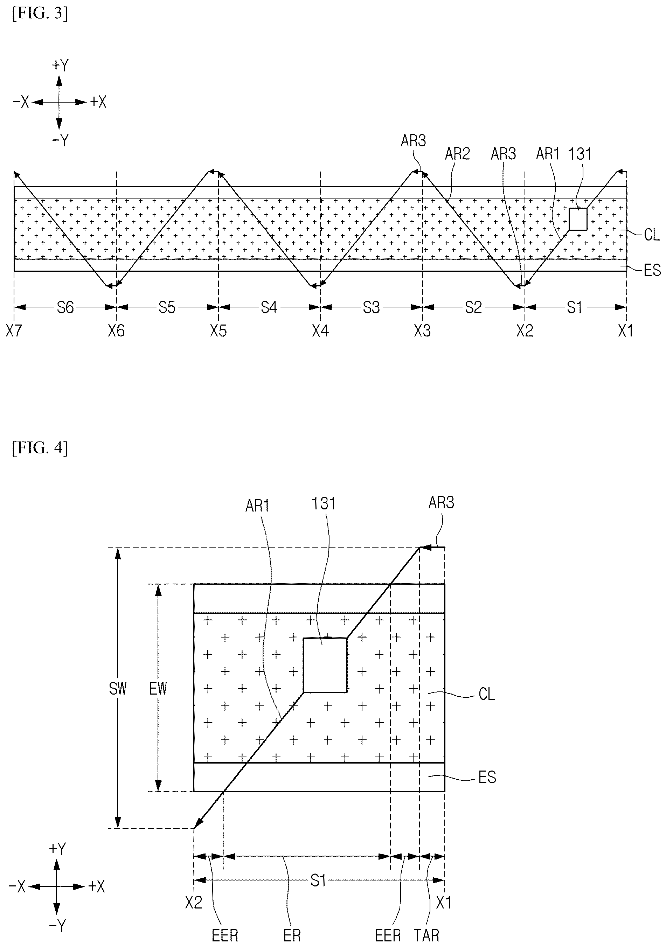

FIG. 3 illustrates measurement of an electrode sheet ES by a measuring device 130.

FIG. 4 illustrates a section S1 of the electrode sheet ES.

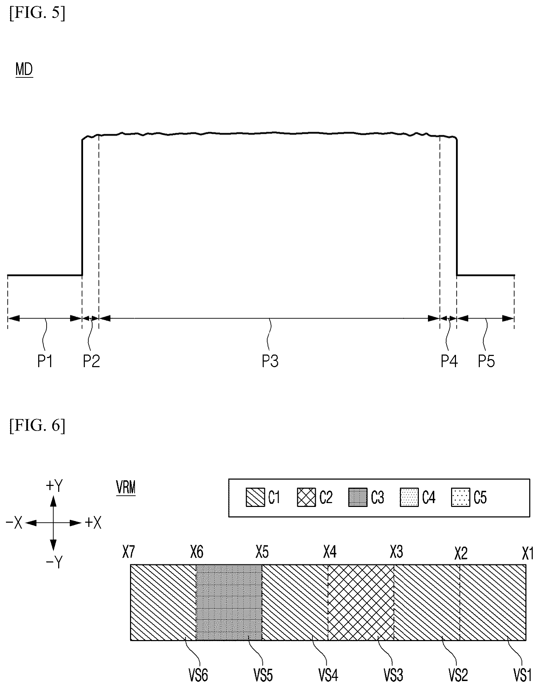

FIG. 5 illustrates measurement data MD generated from the section S1.

Referring to FIGS. 1 to 5, the secondary battery manufacturing system 10 may include an unwinder 111, a rewinder 113, a processing apparatus 115, a first rotary encoder 121, a second rotary encoder 123, a measuring device 130, a first controller 141, a second controller 143, a server 210, a server 220, and a user device 300.

The secondary battery manufacturing system 10 may be configured to generate a roll map including data about the electrode sheet ES. The roll map may represent the electrode sheet ES based on coordinates indicating a position on the electrode sheet ES. A secondary battery manufacturing process may be performed on the electrode sheet ES. The roll map may indicate a history of processes performed on the electrode sheet ES and include data related to coordinates. Accordingly, the roll map enables feedback, feedforwarding, and tracking of the secondary battery manufacturing process as described below.

A first electrode roll ER1 on which a previous process is performed may be loaded on the unwinder 111. The unwinder 111 may unwind the electrode sheet ES from the first electrode roll ER1. The rewinder 113 may wind the electrode sheet ES to form a second electrode roll ER2. Accordingly, the electrode sheet ES may be moved between the unwinder 111 and the rewinder 113. The electrode process is performed on the electrode sheet ES unwound from the first electrode roll ER1 and wound into the second electrode roll ER2 and thus may be referred to as a roll-to-roll process.

Roll maps may be generated in units of lots. The electrode sheet ES may be wound into the second electrode roll ER2 and be cut and separated after a certain winding length is reached. A lot is a production unit of the roll-to-roll process, and the separated second electrode roll ER2 is an example of lot. Accordingly, the server 220 may store a roll map of a previous process. The roll map of the previous process may correspond to the first electrode roll ER1. In addition, the server 220 may generate and store a roll map of a current process. The roll map of the current process may correspond to the second electrode roll ER2.

In a roll map, time series data constructed over time (i.e., according to the progress of a process) may be related to coordinate data CD collected based on the amount of movement (i.e., the amount of winding or the amount of unwinding) of the electrode sheet ES.

The manufacture of a secondary battery involves a series of different processes, and a leading process affects the following process. In this case, when time series data of the leading process does not directly match a workpiece, an intermediate product, and a product of the real world, it is difficult to reflect the time series data of the leading process in the following process. Hereinafter, correcting the following process on the basis of data generated according to a result of the leading process will be referred to as feedforward.

Here, the workpiece is an article provided as a result of each process, e.g., the electrode sheet ES of FIG. 1 on which the coating process, the roll pressing process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

An electrode process of a secondary battery includes a series of roll-to-roll processes. For feed forwarding, time series data should be related to positions on workpieces, components, intermediate products, and products of the real world. The roll map may allow time series data to be related with coordinate data including coordinates of the positions on the workpieces, the components, the intermediate products, and the products of the real world. The roll map may provide matching between the time series data and the workpieces, the components, the intermediate products, and the products of the real world, based on the coordinate data. Accordingly, feedforward based on generation of the roll map and the roll map may improve the productivity and quality of the secondary battery manufacturing process by digitizing and objectifying aspects of a process that depend on an operator's discretion. A roll map of a preceding lot may be used to improve a process for a following lot, and this operation may be referred to as process feedback. The process feedback using the roll map may include identifying process conditions and process parameters that cause problems and defects, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event such as a quality issue occurs in an already shipped battery cell, history data of the manufacture of the battery cell may be retrieved based on the cell ID to identify a cause of a problem in the manufacture of the battery cell.

The electrode sheet ES may be processed by the processing apparatus 115. For example, the processing apparatus 115 may include a coater, and the electrode sheet ES may be coated with an electrode slurry. As another example, the processing apparatus 115 may include a pressing roll, and the roll pressing process may be performed on the electrode sheet ES coated with the electrode slurry. As another example, the processing apparatus 115 may include a splicing die and a scrap port, and a part of the electrode sheet ES may be scrapped. As another example, the processing apparatus 115 may include a slitting knife, and the electrode sheet ES may be divided into a plurality of electrode sheets.

The coating process is a process of applying a coating material such as the electrode slurry onto the electrode sheet ES. The electrode slurry may include an electrode active material, a conductive agent, a binder, and a solvent. The electrode slurry may be provided by dissolving the electrode active material, the conductive additive, the binder, etc. in the solvent.

The roll pressing process is a process of passing the electrode sheet ES coated with the electrode slurry between pressing rolls facing each other. By using the pressing rolls, a surface of an electrode may be planarized and a bonding force between the active material and a current collector may be increased.

The coating process and the roll pressing process are performed on the electrode sheet ES having a broad width to enhance the production (e.g., GWh) per line of secondary battery production equipment. Thereafter, in the slitting process, the electrode sheet having the broad width may be cut according to the specifications of a battery cell.

In P110, coordinate data CD and measurement data may be collected. The coordinate data CD may be collected by the roll map PLC 141.

The first rotary encoder 121 may be configured to sense an amount of the electrode sheet ES unwound from the first electrode roll ER1 by the unwinder 111. Accordingly, the first rotary encoder 121 may be configured to generate an unwinding amount signal UWAS indicating the unwinding amount of the electrode sheet ES. The first rotary encoder 121 may be configured to transmit the unwinding amount signal UWAS to the roll map PLC 141. The roll map PLC 141 may be configured to collect unwinding amount data based on the unwinding amount signal UWAS of the electrode sheet ES.

The second rotary encoder 123 may be configured to sense an amount of the electrode sheet ES wound into the second electrode roll ER2 by the rewinder 113. Accordingly, the second rotary encoder 123 may be configured to generate a winding amount signal WAS indicating the winding amount of the electrode sheet ES. The second rotary encoder 123 may be configured to transmit the winding amount signal WAS to the roll map PLC 141. The roll map PLC 141 may be configured to collect winding amount data based on the winding amount signal WAS of the electrode sheet ES.

In some cases, a part of the electrode sheet ES may be scrapped and thus the amount of the electrode sheet ES unwound by the unwinder 111 may be different from the amount of the electrode sheet ES wound by the rewinder 113. When the electrode sheet ES is stretched due to pressure in the roll pressing process, the amount of the electrode sheet ES unwound by the unwinder 111 may be different from the amount of the electrode sheet ES wound by the rewinder 113.

The roll map PLC 141 may be configured to collect the coordinate data CD of the electrode sheet ES, based on one of the winding amount signal WAS and the unwinding amount signal UWAS of the electrode sheet ES. For example, the roll map PLC 141 may determine a moving distance of the electrode sheet ES in a current process step based on the winding amount signal WAS of the electrode sheet ES. Accordingly, a coordinate indicating a relative position of a part of the electrode sheet ES to be wound by the rewinder 113 on the electrode sheet ES may be determined at each point in time when the coating process is performed. Hereinafter, the technical idea of the present invention will be described with respect to an embodiment in which the roll map PLC 141 collects the coordinate data CD based on the winding amount signal WAS of the electrode sheet ES.

The coordinate data CD may include coordinates matching each part of the electrode sheet ES. That is, each of arbitrary points on the electrode sheet ES may match a coordinate. The coordinate may be, but is not limited to, one-dimensional (1D) quantity in an X-axis direction, i.e., a machine direction of the electrode sheet ES (or a longitudinal direction of the electrode sheet ES). The coordinate may be two-dimensional (2D) quantity in the X-axis direction and a Y-axis direction, i.e., a transverse direction of the electrode sheet ES (or a width direction of the electrode sheet ES).

To describe movements of the electrode sheet ES and a sensing part of the measuring device 130, a (+) X-axis direction, a (-) X-axis direction, a (+) Y-axis direction, and a (-)Y-axis direction are defined here. The (+) X-axis direction and the (-) X-axis directions are opposite to each other, and the (+) Y-axis direction and the (-)Y-axis directions are opposite to each other. The (±) X-axis direction may be substantially perpendicular to the (±) Y-axis direction. The (±) X-axis direction ay be referred simply to as the X-axis direction, and the (±) Y-axis direction may be referred simply to as the Y-axis direction.

The measuring device 130 may be configured to measure the electrode sheet ES to collect measurement data of the electrode sheet ES. The measuring device 130 may measure the electrode sheet ES by a scanning method. While scanning is performed by the measuring device 130, the measuring device 130 may move in the (±) Y-axis direction. While the measuring device 130 performs scanning in the (±) Y-axis direction, the electrode sheet ES may be moved in the (+) X-axis direction by the unwinder 111 and the rewinder 113.

While scanning is performed once, a sensing part 131 of the measuring device 130 may move from a first side of the electrode sheet ES to a second side of the electrode sheet ES in the (-) Y-axis direction or from the second side of the electrode sheet ES of the first side of the electrode sheet ES in the (+) Y-axis direction. The sensing part 131 of the measuring device 130 may move in the (-) X-axis direction relative of the electrode sheet ES due to the movement of the electrode sheet ES.

In FIGS. 3 and 4, arrows AR1, AR2 and AR3 indicate a movement of the sensing part 131 of the measuring device 130 relative to the electrode sheet ES. The arrows AR1 correspond to scanning of the sensing part 131 in the (-) Y-axis direction, and the arrows AR2 correspond to scanning of the sensing part 131 in the (+) Y-axis direction. After each of the scanning is completed, it takes a set time to change a direction of movement of the sensing part 131. The arrows AR3 indicate movement of the sensing part 131 relative to the movement of the electrode sheet ES while the direction of movement of the sensing part 131 is changed.

The measurement data may include a plurality of measured values expressed numerically. For example, the measurement data may include size data, e.g., a thickness and a width, of the electrode sheet ES, data of a loading amount of a coating material on the electrode sheet ES, size data, e.g., a width of an insulating material on the coating material and an overlapping width between the coating material and the insulating material, mismatch data between coated lanes on an upper surface of the electrode sheet ES and coated lanes on a lower surface of the electrode sheet E, and the like. Here, the loading amount of the coating material is the amount of the coating material loaded per unit area of the electrode sheet ES, and may be an area density of the coating material.

Whether a measured part of the electrode sheet ES is defective or not may be determined by processing the measurement data by a set method. When an amount of the measured coating material on the electrode sheet ES (e.g., the loading amount of the coating material on the electrode sheet ES or a thickness of the electrode sheet ES) is in a set range including upper and lower limits, a corresponding part of the electrode sheet ES may be determined as a good-quality part. The corresponding part of the electrode sheet ES may be determined as defective, when the amount of the measured coating material on the electrode sheet ES (e.g., the loading amount of the coating material on the electrode sheet ES or the thickness of the electrode sheet ES) is less than the lower limit or greater than the upper limit.

The measuring device 130 may include the sensing part 131 and a processor 133. The sensing part 131 may be configured to sense a physical quantity of the electrode sheet ES to generate a measurement signal MS. For example, the sensing part 131 may include a time delay and integration (TDI) camera, a complementary metal oxide semiconductor (CMOS) image sensor, a time-of-flight (TOF) sensor, etc. The sensing part 131 may include an emitter and a receiver that are configured to perform measurement using a non-destructive signal such as ultrasound waves, microwaves, terahertz waves, or infrared rays. The sensing part 131 may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device 130 may include a pressure sensor, a temperature sensor, an ultrasonic sensor, a proximity sensor, a door state sensor, a motion tracking sensor, a humidity sensor, a visible light and infrared sensor, a camera, etc.

Hereinafter, the technical idea of the present invention will be described with respect to, as a non-limiting example, an embodiment in which the measuring device 130 is a loading gauge configured to measure an amount of a coating layer loaded on a sheet material SM (e.g., a web gauge of Thermofisher Scientific) and an embodiment in which the measuring device 130 is thickness gauge configured to measure a thickness of the sheet material SM. Those of ordinary skill in the art would be able to derive an embodiment in which a measuring device includes one of the above-described sensors and is configured to sense one of the above-described measured amounts.

The secondary battery manufacturing system 10 may further include an inspector configured to inspect the electrode sheet ES to collect inspection data. The inspection data may include a judgement of the quality of a part of the electrode sheet ES and a process event. For example, the inspection data may include data about the appearance of the electrode sheet ES collected by an image-based inspection device such as a vision machine, data about disconnections and seams on the electrode sheet ES, data about a part of the electrode sheet ES on which sampling inspection is performed, data about a part of the electrode sheet ES to be scrapped, data about the scraped part of the electrode sheet ES, data about whether the coating material and the insulating material on the electrode sheet ES are defective or not, data about datum points indicating a position of the electrode sheet ES, and defect data such as pinhole defects, crater defects, line defects, crack defects, side ring defects, island defects, folding defects, wrinkle defects, pit defects, and scratch defects. The datum points may be formed on the electrode sheet ES at certain intervals, and other elements on the electrode sheet ES may be located based on the datum points. The inspector may be a color sensor, a joint sensor, a datum point sensor, or a vision machine.

The measuring device 130 may be configured to collect two or more types of data. For example, the measuring device 130 may be configured to measure a thickness of the electrode sheet ES and a measured amount of the coating material on the electrode sheet ES (e.g., the loading amount of the coating material on the electrode sheet ES or the thickness of the electrode sheet ES). Alternatively, the measuring device 130 may be configured to sense datum points on the electrode sheet ES in addition to measuring a mismatch of the electrode sheet ES.

The measurement data and the inspection data described above may be time series data. The measurement data and the inspection data may be temporally ordered. Temporal ordering is a main feature of time series data. Temporal ordering should be understood as organizing events in an order in which they occur and arrive to be processed. That is, the measurement data and the inspection data may be stored based on point in times when measurement and inspection are performed, and may be related to time. Accordingly, each of measured values of the measurement data may be matched to time, and each of inspection values of the inspection data may be matched to time.

For example, data of measured amounts (e.g., a loading amount of the coating material on the electrode sheet ES or a thickness of the electrode sheet ES) may include a series of measured amounts (e.g., loading amount of the coating material on the electrode sheet ES or thicknesses of the electrode sheet ES) and time values related to the series of the amounts of the loaded coating material. The values of the loading amount and the time values may be matched in a one-to-one manner but are not limited thereto. As another example, the defect data may include a value indicating a defect and a time value related to the value indicating the defect. Here, the value indicating the defect should be understood to mean that the value includes information regarding at least one of the presences of defects or the types of the defects.

The processor 133 may be configured to collect a measurement signal MS sensed by the sensing part 131 to collect measurement data. The processor 133 may be connected to the sensing part 131 by wire or wirelessly. The processor 133 may be configured to correct the measurement data by adding an offset measurement amount to each of the measured values of the measurement data. Due to the progress of a process and the aging of equipment, the measured values of the measurement data may be different from actual values. The processor 133 may correct the measurement data based on the offset measurement amount to improve the reliability of the secondary battery manufacturing system 10 and a roll map generating method. The offset measurement amount may be determined based on information given to an equipment system by a method such as a sample test.

The roll map PLC 141 may be in operative communication with the first and second rotary encoders 121 and 123, the measuring device 130, and additional measuring devices and inspectors through a wired or wireless data network. The data network may be unidirectional or bidirectional. The data network may be implemented by a physical channel, WIFI, public networks and/or specialized networks using Bluetooth or other frequency bands. The first and second rotary encoders 121 and 123, the measuring device 130, and the additional measuring devices and inspectors may be configured to collect data from equipment, a workpiece, an intermediate product, and a product in the secondary battery manufacturing system 10 or to generate a signal for collecting data therefrom.

The roll map PLC 141 may be configured to transmit the coordinate data CD1 to the processor 133. The processor 133 may be configured to relate the coordinate data CD with the measurement data to generate coordinate-related measurement data. In general, the measurement data may be processed based on a trigger point. Examples of the processing of the measurement data may include storing the measurement data, manipulating the measurement data (e.g., generating the coordinate-related measurement data), and transmitting the measurement data.

As a non-limiting example, a trigger point for processing the measurement data may be the completion of scanning. For example, the sensing part 131 may scan the electrode sheet ES in the width direction of the electrode sheet ES, and the measurement data may be stored, processed, manipulated, and transmitted whenever scanning is performed. As another example, the trigger point may be the completion of performing scanning multiple times or the completion of partially performing scanning.

The electrode sheet ES may be divided into a plurality of sections S1, S2, S3, S4, S5, and S6 based on scanning performed by the sensing part 131 of the measuring device 130. Each of the plurality of sections S1, S2, S3, S4, S5 and S6 may correspond to one of scans performed by the sensing part 131. In FIG. 3, dashed lines represent imaginary boundary lines between the plurality of sections S1, S2, S3, S4, S5, and S6.

As shown in FIG. 4, the first section S1 may include a turnaround region TAR, outside-electrode regions EER, and an electrode region ER.

The electrode region ER corresponds to a part of the section S1 of the electrode sheet ES that is actually scanned. The turnaround region TAR corresponds to a part of the electrode sheet ES that passes the sensing part 131 in the (+) X direction during a change of a direction of the sensing part 131.

A stroke width SW, which is a width by which the sensing part 131 moves while scanning is performed once, may be greater than a width EW of the electrode sheet ES. Accordingly, the sensing part 131 measures the outside of the electrode sheet ES for a certain time period whenever scanning is performed by the sensing part 131. The outside-electrode regions EER correspond to parts of the electrode sheet ES that pass the sensing part 131 in the (+) X direction while the sensing part 131 is positioned outside the electrode sheet ES.

Here, the positioning of the sensing part 131 outside the electrode sheet ES should be understood to mean that the sensing part 131 is spaced apart from the electrode sheet ES in a horizontal direction (e.g., the (±) Y-axis direction) and thus does not overlap the electrode sheet ES in a direction perpendicular to the electrode sheet ES.

Similar to the section S1, the sections S2, S3, S4, S5, and S6 may each include a turnaround region TAR, outside-electrode regions EER, and an electrode region ER.

According to example embodiments, the measuring device 130 may be configured to calibrate the coordinate data CD, based on a position of the measuring device 130. More specifically, the measuring device 130 may be configured to calibrate the coordinate data CD based on an offset length OD, so that coordinates of the coordinate data CD may be related with the measured values of the measurement data.

The measuring device 130 may collect measurement data of a part corresponding to (e.g., overlapping) the sensing part 131 and the coordinate data CD is collected by the second rotary encoder 123 spaced apart from the sensing part 131 as described above, and thus, a part of the electrode sheet ES corresponding to the coordinate data CD and a part of the electrode sheet ES corresponding to the measurement data may be different from each other at the same point in time.

In P120, compressed measurement data PMD may be generated. The compressed measurement data PMD may be generated by the processor 133.

According to example embodiments, the processor 133 may calculate a representative value of measured values of the measurement data to collect the compressed measurement data PMD, calibrate the coordinate data CD, which is collected at the same time as the measurement data, based on the offset length OD, and connect the calibrated coordinate data CD with the representative value of the measurement data. The measured values of the measurement data may be matched to time, and representative values (e.g., an average) of the compressed measurement data PMD may be matched to calibrated coordinates (e.g., a calibrated start coordinate and end coordinate).

As another example, the sensing part 131 may be directly connected to a position measuring device such as the first and second rotary encoders 121 and 123 or be configured to sense a datum point on the electrode sheet ES. In this case, the sensing part 131 may collect the coordinate data CD as well as the measurement data. In this case, the processor 133 may be configured to collect the coordinate-related measurement data based on the measurement data and the coordinate data CD transmitted from the sensing part 131.

A plurality of guide rolls may be interposed between the sensing part 131 and the rewinder 113 to define a moving path of the electrode sheet ES. Accordingly, the offset length OD may be defined as a length of the electrode sheet ES between the sensing part 131 and the rewinder 113 according to the moving path of the electrode sheet ES. The offset length OD may be equal to or greater than a straight line distance between the sensing part 131 and the rewinder 113.

A file size of the compressed measurement data PMD may be different from a file size of the measurement data. The file size of the compressed measurement data PMD may be less than the file size of the measurement data. Accordingly, it is possible to prevent overload on the server 220.

The representative value of the compressed measurement data PMD may include at least one of an average, a standard deviation, a median value, a maximum value, and a minimum value of measurement data of each of the plurality of sections S1, S2, S3, S4, S5, and S6. The average, the standard deviation, the median value, the maximum value, and the minimum value may be calculated from a part of the measurement data.

More specifically, the measurement data may include parts P1, P2, P3, P4, and P5. The parts P1 and P5 may be measurement data generated from an uncoated part (i.e., an uncoated region) of the electrode sheet ES and be excluded in the generation of the compressed measurement data PMD. The parts P2 and P4 may be measurement data generated from a boundary between an uncoated part and a coated part (i.e., a coated region). Accordingly, data of the parts P2 and P4 is likely to cause distortion of the compressed measurement data PMD and thus may be excluded in the generation of the compressed measurement data PMD. The parts P1 and P5 may be referred to as first excluded parts, and the parts P2 and P4 may be referred to as second excluded parts.

The compressed measurement data PMD may be generated based on the part P3 of the measurement data MD. Accordingly, a part P3 of the measurement data MD may be referred to as an effective region.

When data points that are greater than or equal to a threshold among values of the measurement data MD appear consecutively for a number equal to or greater than a set number, data points subsequent to the data points may be classified as a coated part. Similarly, when data points that are less than the threshold among the values of the measurement data appear consecutively for a number equal to or greater than the set number, data points subsequent to the data points may be classified as an uncoated part.

The compressed measurement data PMD may further include a judgement value. The judgement value may be determined by the processor 133. A judgement value may be determined individually for each of the plurality of sections S1, S2, S3, S4, S5, and S6. The judgement value of each of the plurality of sections S1, S2, S3, S4, S5, and S6 of the electrode sheet ES may be determined based on a comparison between a set range and a measured value (or an average).

For example, a measured value (or an average) that is in a first range may be determined as normal, a measured value (or an average) that is in a second range greater than the first range may be determined as excessive, a measured value (or an average) that is in a third range greater than the second range may be determined as very excessive, a measured value (or an average) that is in a fourth range less than the first range may be determined as insufficient, and a measured value (or an average) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The compressed measurement data PMD may include a start coordinate and an end coordinate. The plurality of sections S1, S2, S3, S4, S5, and S6 of the electrode sheet ES may include start and end coordinates. The processor 133 may be configured to determine a start coordinate and an end coordinate of each of the plurality of sections S1, S2, S3, S4, S5, and S6. The plurality of sections S1, S2, S3, S4, S5, and S6 may be sequentially arranged and connected to one another.

According to example embodiments, the start coordinate and the end coordinate of each of the plurality of sections S1, S2, S3, S4, S5, and S6 may be determined based on scanning performed by a sensing part. More specifically, the end coordinate of each of the plurality of sections S1, S2, S3, S4, S5, and S6 may be a position of the sensing part 131 relative to the electrode sheet ES at a point in time when scanning performed by the sensing part 131 ends. The end coordinate of a preceding section among the plurality of sections S1, S2, S3, S4, S5, and S6 may be the start coordinate of a section following the preceding section.

For example, X1 may be the start coordinate of the section S1. X2 may be the end coordinate of the section S1 and the start coordinate of the section S2. X3 may be the end coordinate of the section S2 and the start coordinate of the section S3. X4 may be the end coordinate of the section S3 and the start coordinate of the section S4. X5 may be the end coordinate of the section S4 and the start coordinate of the section S5. X6 may be the end coordinate of the section S5 and the start coordinate of the section S6. X7 may be the end coordinate of the section S6 and the start coordinate of the section S7.

Although it is described above that each of the plurality of sections S1, S2, S3, S4, S5, and S6 of the electrode sheet ES corresponds to a scan performed by the sensing part 131, each of the plurality of sections S1, S2, S3, S4, S5, and S6 of the electrode sheet ES may correspond to a plurality of scans performed by the sensing part 131 or a part of a scan performed by the sensing part 131.

In P130, a send command SCD may be generated. The send command SCD may be generated by a processor. The processor 133 may be configured to generate the send command SCD and transmit the send command SCD to the roll map PLC 141. The processor 133 may be configured to transmit the compressed measurement data PMD to the roll map PLC 141.

The roll map PLC 141 receiving the send command SCD may be configured to transmit the compressed measurement data PMD to the second controller 143.

The compressed measurement data PMD transmitted to the second controller 143 may be transmitted to the server 220 via the second controller 143 and the server 210. The second controller 143 and the server 210 may relay communication of the compressed measurement data PMD between the server 220 and the roll map PLC 141. However, embodiments are not limited thereto, and the roll map PLC 141 may directly transmit the compressed measurement data PMD to the server 220.

The second controller 143 may be configured to control operations of the unwinder 111, the rewinder 113, and the processing apparatus 115. The second controller 143 may be configured to generate a signal for operating or stopping the unwinder 111, the rewinder 113, and the processing apparatus 115. The signal for operating or stopping the unwinder 111, the rewinder 113, and the processing apparatus 115 may be generated based on a body including a product ID and details of a manufacturing recipe.

For control of a process, a communication line may be installed between the second controller 143 and the server 220 to connect the second controller 143 and the server 220 via the server 210. Accordingly, data transmission through the second controller 143 may reduce resources required for the installation of the communication line and ensure efficient data processing and management, compared to a case in which the first and second rotary encoders 121 and 123 and the measuring device 130 directly transmit the unwinding amount signal UWAS, the winding amount signal WAS, and the measurement signal MS to the server 220 and a case in which the roll map PLC 141 directly transmits the compressed measurement data PMD to the server 220.

As a non-limiting example, the roll map PLC 141 and the second controller 143 may be programmable logic controllers (PLCs). A PLC is a special type of microprocessor-based controller that stores instructions using a programmable memory and implements functions such as logic, sequencing, timing, counting and arithmetic operations to control machines and processes. It is easy to operate and program the PLC.

The first and second controllers 141 and 143 may include a power supply, a CPU, an input interface, an output interface, a communication interface, and memory devices. The power supply may be configured to supply power to other components of the first and second controllers 141 and 143, such as the CPU, the input interface, the output interface, the communication interface, and the memory devices, for the first and second controllers 141 and 143. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to control communication between modules that implement logic and convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through the output module. The communication interface may be configured to transmit and receive data between the first and second controllers 141 and 143 or between the second controller 143 and the server 210.

However, embodiments are not limited thereto, and the first and second controllers 141 and 143 may each include one of a simple controller, a complex processor such as a microprocessor, a CPU or a GPU, a processor configured by software, dedicated hardware, and firmware. The first and second controllers 141 and 143 may be implemented, for example, by a general-purpose computer or application-specific hardware such as a digital signal processor (DSP), a field-programmable gate array (FPGA) or an application specific integrated circuit (ASIC).

The compressed measurement data PMD may be transmitted to the server 220 via the server 210. The server 210 may be a communication server. The server 210 may be, for example, a server for log data-based communication but is not limited thereto. The server 210 may be a program for communication between the second controller 143 of manufacturing equipment and the server 220 for manufacturing management. The server 210 may be implemented by hardware as described below. A language and protocol of the server 220 may be different from a language and protocol of the controller 143. For example, the language of the server 220 may be SQL, and the language of the controller 143 may be a ladder diagram.

The server 210 may be configured to convert electrode specification data ESD transmitted from the server 220 into the language of the controller 143. In addition, the server 210 may be configured to convert the compressed measurement data PMD into the language of the server 220 and record the compressed measurement data PMD in a database of the server 220.

The electrode specification data ESD may include model information and a recipe of the electrode sheet ES for processing the electrode sheet ES. The electrode specification data ESD may include all matters related to the processing of the electrode sheet ES, e.g., the number of lots to be processed in a current process, the number of coated part lines to be formed on the electrode sheet ES, process conditions such as temperature, humidity, and pressure, and process parameters such as a moving speed of the electrode sheet ES, a discharge rate of a coating die, and pressure of pressing rolls.

For control of a process, a communication line for connecting the second controller 143 and the server 220 via the server 210 may be installed between the second controller 143 and the server 220. Accordingly, data transmission through the second controller 143 may reduce resources required for the installation of the communication line and ensure efficient data processing and management, compared to a case in which the first and second rotary encoders 121 and 123 and the measuring device 130 directly transmit the unwinding amount signal UWAS, the winding amount signal WAS, and the measurement signal MS to the server 220 and a case in which the first controller 141 directly transmits the compressed measurement data PMD to the server 220.

The server 220 may be configured to generate a roll map. Roll maps may be generated in units of lots. The roll map may include data about specifications of a lot. The specifications of the lot may include, for example, a lot number, a length of the wound electrode sheet ES, a width of the electrode sheet ES, and materials and a composition used to process the electrode sheet ES.

According to example embodiments, the server 220 may be a data processing system that supports all activities required to manage the manufacture of a secondary battery, such as work schedule management, work instructions, quality control, and work performance aggregation. The server 220 may be, for example, a manufacturing execution system (MES). The server 220 may be configured to perform inputting, processing, outputting, and communication of data necessary for the manufacture of electrodes, including the coating process, a press process, and a manufacturing process.

As another example, the server 220 may be a static process controller (SPC). The server 220 may be configured to store and process inspection data of the electrode sheet ES. The server 220 may manage the quality of processing the electrode sheet ES by continuously monitoring the processing of the electrode sheet ES based on the inspection data. The server 220 may collect and analyze manufacturing data in almost real time to identify problematic conditions in a timely manner and provide a notification to an operator before potential problems occur.

When the server 220 is an MES or an SPC, the server 220 may be unsuitable to store the compressed measurement data PMD for a long time. The server 220 may be, for example, a data warehouse, and store the compressed measurement data PMD for a long time based on a quality guarantee period of a product or the like.

According to other example embodiments, the server 220 may perform all functions of an MES, an SPC, and a data warehouse or be provided separately from the MES, the SPC, and the data warehouse to create a role map.

FIG. 6 illustrates a visualized roll map VRM.

Referring to FIGS. 1 and 6, the server 220 may be configured to transmit data of a roll map to the user device 300. The user device 300 may include a display device to display the visualized roll map VRM based on data D1 of the roll map.

The visualized roll map VRM may include a plurality of visualization sections VS1, VS2, VS3, VS4, VS5 and VS6 corresponding to the plurality of sections S1, S2, S3, S4, S5 and S6 of the electrode sheet ES (see FIG. 3). Each of the plurality of visualization sections VS1, VS2, VS3, VS4, VS5, and VS6 may include a start coordinate, an end coordinate, and a color.

The start coordinate of the visualization section VS1 may be X1 and the end coordinate thereof may be X2. The start coordinate of the visualization section VS2 may be X2 and the end coordinate thereof may be X3. The start coordinate of the visualization section VS3 may be X3 and the end coordinate thereof may be X4. The start coordinate of the visualization section VS4 may be X4 and the end coordinate thereof may be X5. The start coordinate of the visualization section VS5 may be X5 and the end coordinate thereof may be X6. The start coordinate of the visualization section VS6 may be X6 and the end coordinate thereof may be X7.

A judgement value of the visualization sections VS1, VS2, VS4, and VS6 may be displayed in color C1, a judgement value of the visualization section VS3 may be displayed in color C2, and a judgement value of the visualization section VS5 may be displayed in color C3.

The color C1 may indicate that the judgement value of the visualization sections VS1, VS2, VS4, and VS6 is normal, the color C2 may indicate that the judgement value of the visualization section VS3 is excessive, and the color C3 may indicate that the judgement value of the visualization section VS3 is very excessive. A color C4 may indicate that a judgement value is insufficient, and a color C5 may indicate that a judgement value is very insufficient.

Here, the visualized roll map VRM displaying the compressed measurement data PMD is illustrated for convenience of description but is only an example and thus the technical idea of the present invention should not be construed as being limited thereby in any sense. The visualized roll map VRM may further display additional data, such as inspection data generated by an inspector, equipment data, and data of process parameters. The additional data may be related to coordinates, and a way in which the additional data is related with the coordinates may be different from that of the compressed measurement data PMD. For example, pinch hole defect data, which is a piece of the inspection data, may be matched to a single coordinate representing a position of a pinch hole rather than a start coordinate and an end coordinate.

The processor 133 may be configured to transmit measurement data to a second server 220. According to embodiments, the measurement data may be transmitted to the second server 180 via an server 210. The server 210 may be a device for communication between the processor 133 and the server 220.

The processor 133, and the servers 210 and 220 may be implemented by hardware, firmware, software, or a combination thereof. For example, the processor 133, and the servers 210 and 220 may include computing devices such as workstation computers, desktop computers, laptop computers, and tablet computers. The processor 133 and the servers 210 and 220 may include a simple controller, a complex processor such as a microprocessor, a CPU, or a GPU, a processor configured by software, dedicated hardware, or firmware. The processor 133 and the servers 210 and 220 may be implemented, for example, by a general-purpose computer or application-specific hardware such as a digital signal processor (DSP), a field programmable gate array (FPGA), or an application specific integrated circuit (ASIC).

The servers 210 and 220 may include a physical server or a cloud server. The servers 210 and 220 may provide data and an analysis result to an operator through various frameworks. The framework may include a protocol supporting data transmission to provide updated visualization when the user device 300 visualizes data through a user interface and new data is calculated by the servers 210 and 220. The protocol supporting data transmission may include HTML, JavaScript, and/or JSON.

The servers 210 and 220 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

The secondary battery manufacturing system 10 may implement a plug-in architecture with an API for obtaining data to provide a plug-and-play connection between the measuring device 130 and additional measuring devices and inspectors. Accordingly, resources in a certain process step and a specific site can be easily transferred to a different process and a different site or new resources can be easily introduced into each process step and each site.

A data network between the components of the secondary battery manufacturing system 10 may include various types of communication channels including unidirectional and bidirectional wired and wireless communications. For example, the data network may include an industrial protocol network such as OPC, Modbus, or ProfiNet. The communication channel may be dedicated conduit communication such as universal serial bus (USB), IEEE 802 (Ethernet), IEEE 1394 (FireWire), or other high-speed data communication standards.

In some embodiments, the secondary battery manufacturing system 10 may further include a manual input system that allows an operator to input manufacturing data. The secondary battery manufacturing system 10 may allow data to be input by an operator with an input tool, and a computer-based input of manufacturing data such as Excel file scraping.

According to some embodiments, the operations of the processor 133, the first controller 141, the second controller 143, the server 210, and the server 220, may be implemented by instructions stored on a machine-readable medium that is readable and executable by one or more processors. Here, the machine-readable medium may include an arbitrary mechanism for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The processor 133 and the servers 210 and 220 may be configured by firmware, software, routines, and instructions for performing the above-described operation or a process described below. For example, the processor 133 and the servers 210 and 220 may be instantiated in a memory.

However, the operation of the processor 133 and the servers 210 and 220 may also result from computing devices, distributed computing devices, processors, firmware, software, routines, and other devices executing routines, and instructions.

An architecture configured to generate the roll map and the intermediate roll map may be implemented by adding only the first controller 141 to elements essential in a modern process management system. That is, a system according to example embodiments is capable of using resources of an already-installed manufacturing site and reducing additional capital expenditure. In addition, applying the same architecture as existing manufacturing equipment to newly constructed manufacturing equipment may lead to improvement of the reliability of the manufacture of a secondary battery, detection/improvement of problematic processes, and effective introduction of new processes.

Those of ordinary skill in the art would be able to easily derive a system including an integrated PLC performing the functions of each of the first controller 141 and the second controller 143, based on the above description.

### (Third Embodiment)

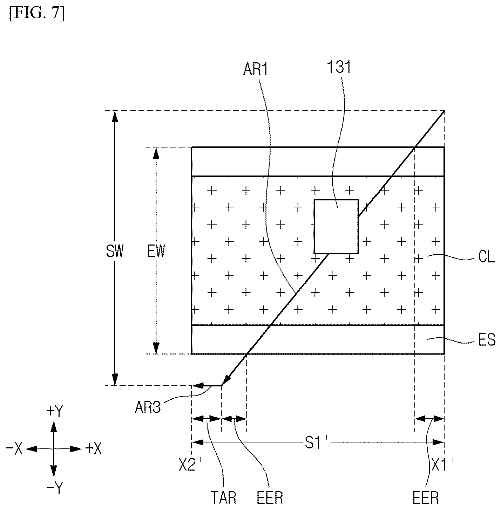

FIG. 7 illustrates a section S1' of an electrode sheet ES.

Referring to FIGS. 1 and 7, the section S1' of the electrode sheet Es may be defined differently from the section S1 of FIG. 4. More specifically, a start coordinate of the section S1' may be a position in the X-axis direction in which scanning of the sensing part 131 starts. An end coordinate of the section S1' may be the same as a start coordinate of a subsequent section. In this case, a trigger of the transmission of compressed measurement data PMD, evaluation data ED, the start coordinate, and the end coordinate in the section S1' may be the start of scanning of the subsequent section.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A roll map generating method comprising:
collecting coordinate data of an electrode sheet and measurement data of the electrode sheet; and
generating compressed measurement data based on the measurement data,
wherein the measurement data is collected by scanning sections of the electrode sheet.

2. The roll map generating method of claim 1, wherein the measurement data includes data of a loading amount of a coating material on the electrode sheet or thickness data of the electrode sheet.

3. The roll map generating method of claim 1, wherein the compressed measurement data includes an average of the measurement data in the section of the electrode sheet.

4. The roll map generating method of claim 3, wherein the average is calculated from a part of the measurement data.

5. The roll map generating method of claim 3, wherein the electrode sheet includes a coated part to which a coating material is applied, and
the average is calculated from a part of the measurement data corresponding to the coated part.

6. The roll map generating method of claim 1, further comprising calibrating the measurement data based on an offset measurement amount.

7. The roll map generating method of claim 1, further comprising determining a start coordinate and an end coordinate of the section of the electrode sheet.

8. The roll map generating method of claim 1, wherein the section of the electrode sheet includes an outside-electrode region that is sensed by a sensing portion of a measuring instrument configured to collect measurement data and is horizontally spaced from the electrodes.

9. The roll map generating method of claim 8, wherein the section of the electrode sheet includes a turnaround region where the sensing part of a measuring device reverses its scanning direction.

10. A roll map generating method comprising:
collecting first coordinate data and first measurement data of a first section of an electrode sheet; and
determining a first average of a part of the first measurement data, a first start coordinate of the first section, and a first end coordinate of the first section, based on the first coordinate data and the first measurement data,
wherein the first measurement data is collected by scanning the first section.

11. The roll map generating method of claim 10, further comprising:
collecting second coordinate data and second measurement data of a second section of the electrode sheet connected to the first section; and
determining a second average of a part of the second measurement data, a second start coordinate of the second section, and a second end coordinate of the second section, based on the second coordinate data and the second measurement data,
wherein the second measurement data is collected by scanning the second section.

12. The roll map generating method of claim 11, wherein the second start coordinate is the same as the first end coordinate.

13. A roll map generating system comprising:
a controller configured to collect coordinate data of an electrode sheet based on a winding amount signal of the electrode sheet generated by an encoder, wherein the encoder is configured to sense a length of the electrode sheet wound by a rewinder to generate the winding amount signal, and the coordinate data indicates a position on the electrode sheet; and
a measuring device including a sensing part and a processor, wherein the sensing part is configured to scan each of a plurality of sections of the electrode sheet to collect measurement data of the electrode sheet, and the processor is configured to collect the measurement data based on a measurement signal generated by the sensing part,
wherein the processor is configured to generate compressed measurement data based on the measurement data, and
the compressed measurement data is smaller in size than the measurement data.

14. The roll map generating system of claim 13, wherein the compressed measurement data includes an average of a part of the measurement data of each of the plurality of sections of the electrode sheet.

15. The roll map generating method of claim 13, wherein the processor is configured to determine a start coordinate and an end coordinate of each of the plurality of sections of the electrode sheet.
